# EUROPEAN PATENT APPLICATION

(11) **EP 1 753 161 A1**
(43) Date of publication of application: **14.02.2007**
(21) Application number: 05291696.2
(22) Date of filing: 08.08.2005
(51) Int. Cl.: H04B 10/17, H04B 10/18

(54) **Raman-amplified optical transmission system and method for amplifying optical signals**

(71) Applicant: ALCATEL, 75008 Paris (FR)
(72) Inventor: Martinelli, Catherine, 91120 Palaiseau (FR); Mongardien, Dominique Annie, 92160 Antony (FR)
(74) Representative: Kohler Schmid Möbus

(57) **Abstract**

A Raman-amplified optical transmission system (1) comprises at least one transmission fiber (4) for Raman amplifying of an optical signal (S), at least one corresponding pump (5, 5.1, 5.2, 5.3) for pumping the transmission fiber (4) at a plurality of pumping wavelengths (λP1, λP2, λP3), at least one Lumped Raman Amplifier LRA (9, 10, 11) for imparting an additional gain on the optical signal (S), and at least one corresponding LRA pump (10, 10.1) for pumping the lumped Raman amplifier LRA. According to the present invention the LRA pump (10, 10.1) is adapted to operate at a single LRA pumping wavelength (λP3), which is essentially equal to one of the pumping wavelengths (λP3) of the pump (5, 5.3) for pumping the transmission fiber (4). In this way the present invention provides an optical transmission system (1) and a corresponding method for amplifying optical signals (S), respectively, which distinguish themselves with respect to cost effectiveness, compactness of realisation, and possible gain control, particularly in relation with constant-gain operation, from prior art solutions.

## Description

### Background of the invention

The invention relates to a Raman-amplified optical transmission system, comprising at least one transmission fiber form Raman amplification of an optical signal, at least one corresponding pump for pumping the transmission fiber at a plurality of pumping wavelengths, at least one lumped Raman amplifier LRA for imparting an additional gain on the optical signal, and at least one corresponding LRA pump for pumping the lumped Raman amplifier.

Furthermore, the invention relates to a method for amplifying an optical signal in an optical transmission system, comprising the steps of Raman amplifying the optical signal in at least one transmission fiber by pumping the transmission fiber at a plurality of pumping wavelengths, and imparting an additional gain on the amplified optical signal in at least one lumped Raman amplifier.

In long distance optical communication systems, erbium doped fiber amplifiers (EDFAs) are commonly used between long spans of transmission fiber. Performing Distributed Raman Amplification between the EDFAs considerably enhances the system performance, resulting in a so-called hybrid Raman-Er amplification scheme. A typical distributed Raman amplifier (DRA) utilises a typical transmission fiber (also referred to as link fiber) as the gain medium which is Raman pumped by means of a pumping light source, e.g. a laser diode, the light of which counter propagates with respect to a propagation direction of the signals to be transmitted. However, this technique requires a large margin of pump power for facing additional losses in the field, e.g. spans of 30 dB in terrestrial systems, losses on the pump path, localised losses at the amplifier sites, etc.

A solution to this problem is to generate additional Raman gain in a lumped Raman amplifier (LRA) being arranged behind the DRA with respect to the direction of optical signal propagation. The term "lumped Raman amplifier" designates a Raman amplifier which achieves localized gain, i.e. the gain medium (e.g. a spooled high-Raman efficiency amplification fiber) is all at the same location. This lumped Raman amplifier can be made of the Dispersion Compensating Fiber (DCF) module, also referred to as Dispersion Compensation Module (DCM). In the DCF module, an on-off gain of up to 8 dB is achievable with less than 400 mW of Raman pump power.

Prior art document US 2004/0091205 A1 discloses an optical transmission system and a method of the above-mentioned type, respectively, wherein the power of a DCM pump laser is adjusted according to a monitored gain of the system in order to keep the gain of the overall optical transmission system constant in the case of transient events, e.g. the loss or addition of channels from/to the system.

Optical transmission systems and related signal amplification methods of the above-mentioned type are also known from documents US 6,310,716 B1 and US 6,657,774 B1, respectively, which both disclose pumping of at least one DRA module and at least one DCF module (DCM) by means of at least one DCM optical pump common and coupled to both the DRA module and the DCM. More than one optical pump can be provided if more pump power is needed.

In practice, known embodiments of prior art optical transmission systems usually provide two pump diodes operating at different wavelengths in the DCM in order to obtain a flat Raman gain profile (gain vs. wavelength) over the totality of the transmission band, which is about 30 to 40 nm wide for a typical optical fiber. Such a solution presents major disadvantages with respect to both cost effectiveness and compactness of realisation because it uses a plurality of diodes. Furthermore, in such a system, gain control with respect to constant gain involves intricate joint control of said plurality of diodes, thus additionally impairing the cost effectiveness as well as the simplicity of system realisation.

### Object of the invention

It is the object of the present invention to provide an optical transmission system and a method of the above-mentioned type, respectively, which overcome the disadvantages with respect to cost effectiveness, compactness, and gain control, in particular constant-gain operation, which are inherent to prior art solutions.

### Description of the invention

This object is achieved by an optical transmission system of the above-mentioned type, wherein the LRA pump is adapted to operate at a single LRA pumping wavelength which is essentially equal to one of the pumping wavelengths of the pump for pumping the transmission fiber.

Correspondingly, the object is also achieved by a method of the above-mentioned type, wherein the lumped Raman amplifier is pumped at a single LRA pumping wavelength which essentially equals one of the pumping wavelengths used for pumping the transmission fiber.

Owing to this approach, the cost and the size of the LRA pump module can essentially be reduced. Furthermore, the inventive solution shows additional advantages with respect to system agility and flexibility: Saturation is strong in a LRA. As a consequence, the pump power must be tuned with add/drops, loading and protection. This is not a straightforward task if several pumping wavelengths are used. Since pumps exchange energy in the amplifier and since they amplify different signal bands, the tuning is not the same for different pumps, i.e. different pumping wavelengths. In order to keep the same (constant) gain with add/drops, loading and protection, it is much easier to tune only one pump power corresponding to only one LRA pumping wavelength according to the invention, as there is only one parameter to adjust in this case.

In a highly preferred embodiment, the lumped Raman amplifier LRA consists of a dispersion compensation module DCM comprising a dispersion compensation fiber DCF which forms the gain medium for imparting an additional gain on the optical signal. Normally, the DCM is used for compensating chromatic dispersion, but as the DCFs used usually show high-Raman gain efficiency, the DCM may also be used to achieve some Raman gain.

In a further development of the inventive optical transmission system the LRA pump preferably comprises only a single laser pump diode. About 400 mW output power is already achievable with single state of the art SC laser diodes; more power could be available in the future. For best use in the LRA, the light of this single laser diode can be depolarized, for example by means of a polarization maintaining fiber.

In addition, the inventive choice of using one of the pump wavelengths of the DRA as the pump wavelength for the LRA is advantageous in order to suit the filter of the DRA. In this way, only one filter is used and pumping the LRA yields only low spectrum ripple, i.e. considerable gain flatness. For instance, the ripple induced by a 10 dB on-off gain DCF pumping is 1 dB with two pump diodes without filter according to a prior art solution. For a single pump diode that suits the filter of the DRA, according to the invention the ripple amounts to only 0,5 dB considering that the filter is designed exclusively for the Raman gain of the DRA, for instance a 17 dB Raman gain, and not for the total Raman gain of both the link fiber and the DCM, for instance a 17 dB + 8 dB Raman gain.

One other consequence of the basic inventive approach is that only one pumping wavelength is available to pump the LRA. Thus the Raman gain cannot be flat over the entire transmission bandwidth of about 30-40 nm. Therefore, the choice for this single pump wavelength is important. It has turned out to be advantageous to choose the LRA pumping wavelength such that it is essentially equal to the longest wavelength used for pumping the transmission fiber. In this way the gain from the LRA pump covers the signal band better, and the shape of the Raman efficiency curve of the LRA (for instance the Raman efficiency curve of a DCF) is closer to that of the transmission fiber.

Using only a single pumping wavelength in the LRA thus entails that the gain of the LRA will generally not be flat over the entire transmission bandwidth. In order to compensate for this fact, in a particularly preferred embodiment the inventive system comprises adjusting means for adjusting a plurality of pumping powers each corresponding to one of the pumping wavelengths used for pumping the transmission fiber. In this way the on-off gain to be performed in the link can be adjusted in order to compensate for the gain shape in the LRA, such as to produce a substantially flat gain profile of the overall optical transmission system. Correspondingly, a preferred further development of the inventive method comprises a further step of adjusting a plurality of pumping powers each corresponding to one of the pumping wavelengths used for pumping the transmission fiber such as to produce a substantially flat gain profile of the overall optical transmission system.

As pointed out in detail above, it constitutes a particularity of the present invention that the gain of the LRA is not flat. This involves that the gain definitions of the DRA and the LRA will not be independent of each other. This dependence only concerns installation and can be handled in the system design step or in the Raman gain adjustment procedure in the field since the Raman pumps for the DRA and the LRA usually are in the same location. However, for add/drops, loading, and protection, the two pump modules (DRA and LRA) can advantageously be managed independently. Therefore, according to another development the inventive optical transmission system further comprises control means for controlling the pump for pumping the transmission fiber independently from the LRA pump. Correspondingly, the method according to the invention may comprise that pumping of the transmission fiber and pumping of the LRA are controlled independently.

Further advantages and characteristics of the present invention can be gathered from the following description of a preferred embodiment with reference to the enclosed drawings. The features mentioned above as well as below can be used in accordance with the invention either individually or in conjunction. The embodiments mentioned are not to be understood as an exhaustive enumeration but rather as examples with regard to the underlying concept of the present invention.

### Drawings

- Fig. 1: is a schematic block diagram of an optical transmission system according to the invention;
- Fig. 2: is a Raman efficiency curve of a typical link fiber and a typical DCF, respectively; and
- Fig. 3: is a gain profile of the link fiber, which has been adjusted according to the invention in order to produce a flat overall system gain.

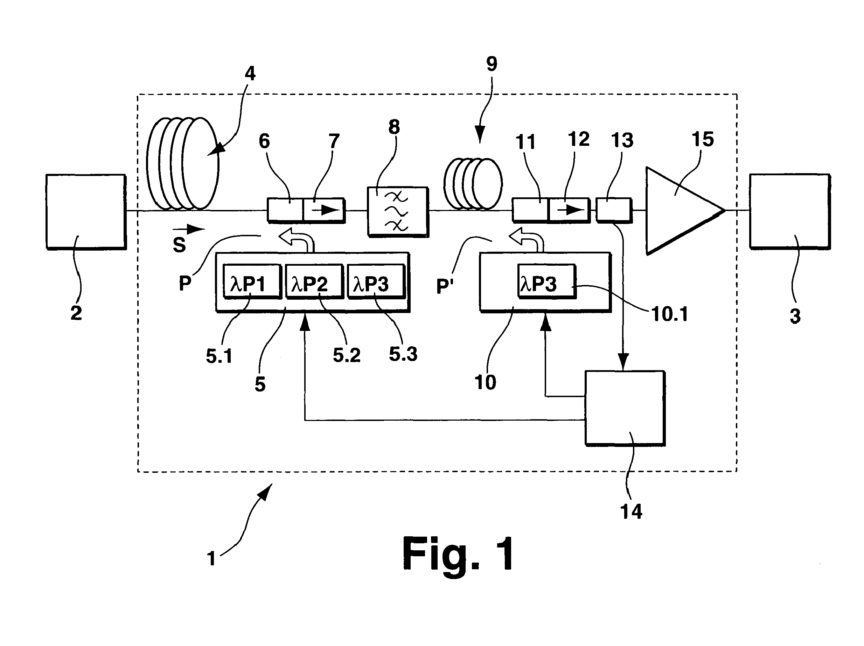

**Fig. 1** shows an optical transmission system **1** according to the invention, which is arranged between a transmitter **2** for generating and transmitting an optical signal **S** to a receiver **3** for receiving and processing the optical signal S. The optical transmission system 1 comprises a distributed Raman amplifier (DRA) in the form a transmission or link fiber **4** arranged for receiving the optical signal S from the transmitter 2. For amplifying the signal S the DRA is pumped by means of a pump **5** for pumping the transmission fiber 4 as indicated by the arrow **P** in Fig. 1. To this end, the system 1 comprises a first multiplexer **6** in operative connection with both the transmission fiber 4 and the pump 5. The pump 5 comprises three laser pump diodes **5.1, 5.2, 5.3** operating at different corresponding pumping wavelengths λ**P1,** λ**P2,** λ**P3,** with λP1 < λP2 < λP3. Behind the multiplexer 6 in the direction of propagation of the optical signal S, i.e. on the downstream side of the fiber 4 is arranged a first isolator **7,** which prevents counter propagating noise signals from entering the DRA. On the downstream side of the first isolator 7 the system 1 includes a band pass filter **8** suitable for the signal band used, e.g. with signal wavelengths λ ranging from 1530 nm to 1570 nm (C+ band). Behind the filter 8 is arranged a dispersion compensation fiber (DCF) **9** of a dispersion compensation module (DCM), being used as a lumped Raman amplifier (LRA) arranged behind the transmission fiber 4 for imparting an additional gain on the propagating optical signal S. The system 1 also comprises a DCF pump **10** for pumping the DCF 9 and a second multiplexer **11.** In Fig. 1, pumping of the DCF 9, i.e. the DCM, by means of the DCF pump 10 is indicated by an arrow **P'.** To this end, the system 1 comprises the second multiplexer 11 in operative connection with both the DCF 9 and the corresponding pump 10. The pump 10 comprises only one laser pump diode **10.1** operating at a single pumping wavelength λP3, which is substantially identical to the longest pumping wavelength λP3 used for pumping the DRA, i.e. the transmission fiber 4. Behind the second multiplexer 11 in the direction of propagation of the optical signal S, i.e. on the downstream side of the DCF 9 is arranged a second isolator **12,** which prevents counter propagating noise signals from entering the DCM, followed by a tap **13** for tapping the signal propagation path. The tap 13 is in operative connection with a control unit **14** which in turn is operatively connected with each of the two pumps 5, 10. By means of the control unit 14, which is adapted for monitoring a gain profile (cf.

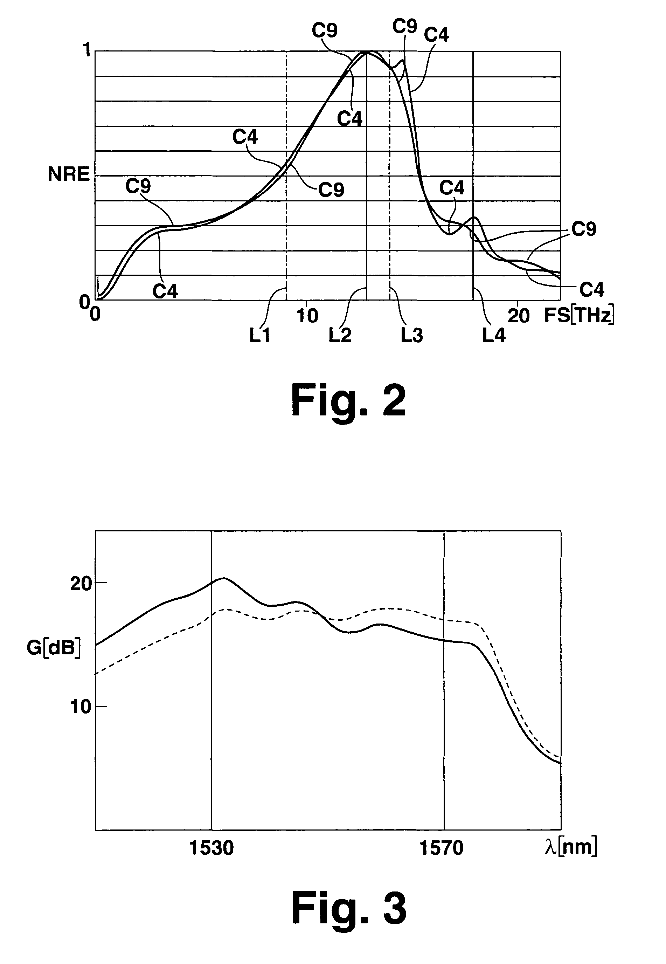

Fig. 3) of the overall system transmission path, i.e. the combined fibers 4, 9, it is possible to adjust the pumping power of each of the pump diodes 5.1-5.3 in the pump 5 for pumping to amplification/link fiber 4. Furthermore, for add/drops, loading, and protection, the two pump modules DRA and DCM, respectively, i.e. the pumps 5, 10 can be controlled independently as indicated by the two separate arrows departing from the control unit 14 in Fig. 1. Downstream of the tap 13 the optical transmission system 1 further comprises an erbium doped fiber amplifier (EDFA) **15.** The system 1 thus sets up a so-called hybrid Raman-Er amplification scheme with the possibility of pumping the DCF 9 for extra gain. For instance, the pump wavelengths used for the DRA are λP1 = 1425 nm, λP2 = 1436 nm, and λP3 = 1463 nm in a C+ band optical transmission system 1.

In Fig. 1 described above, a single inventive optical transmission system 1 is arranged between the transmitter 2 and the receiver 3. However, it should be emphasised that for long haul fiber links a plurality of such systems 1 according to the invention can be arranged along the signal propagation path in order to achieve an extension of the transmission range.

**Fig. 2** shows the normalised Raman efficiency **NRE** curves **C4, C9** of a typical transmission fiber 4 (Fig. 1) and a typical DCF 9 (Fig. 1) plotted as a function of the frequency shift **FS** measured in THz. The curves C4, C9 have been labelled repeatedly to facilitate their distinction despite multiple intersections. As can easily be gathered from Fig. 2, the two curves C4, C9 differ considerably for frequency shift values FS above **14** THz. In the given example for the 1530-1570 nm signal band (C+ band), the vertical lines **L1-L4** delimit regions corresponding to gain contributions of the pump diode 5.2 operating at λP2 = 1436 nm (region between solid lines L2, L4) and of the pump diode 5.3 operating at λP3 = 1463 nm (dash-dotted lines L1, L3), respectively. This illustrates the advantages of choosing λP3 for pumping the DCF 9 since the gain achieved by pump λP3 covers the signal band better, the shape of the efficiency curve of the DCF 9 being closer to that of the transmission fiber 4 in the corresponding area (between lines L1, L3). Note that the gain contribution of the third pump diode 5.1 with λP1 = 1425 nm, which is not shown explicitly in Fig. 2, is even less interesting than that for λP2 = 1436 nm (diode 5.2).

In order to compensate for the fact that the gain produced in the DCF 9 (Fig. 1) is not flat due to the fact that only one pump diode 10.1 is used in the corresponding DCM pump 10, the control unit 14 is adapted to adjust the pump powers of the DRA, i.e. the pump powers of the individual pump diodes 5.1-5.3 in the pump 5 for pumping the transmission fiber 4. This is illustrated in the following **Fig. 3** for a 17 dB on-off gain in the transmission fiber 4 and an 8 dB on-off gain in the DCF 9. The solid curve is the on-off gain **G** measured in dB that must be realized in the transmission fiber 4 in order to compensate for the gain shape in the DCF 9 (cf. Fig. 2) owing to the use of the single pump 10.1 at λP3 = 1463 nm, thus obtaining an overall system gain profile G that is essentially flat (dotted curve in Fig. 3) over the entire transmission bandwidth. The latter is delimited by the two solid vertical lines at λ = 1530 nm and λ = 1570 nm (C+ band).

In this way the present invention provides an optical transmission system and a method for amplifying optical signals, respectively, which distinguish themselves with respect to cost effectiveness, compactness of realisation, and possible gain control, particularly in relation with constant-gain operation, from prior art solutions.

## Claims

1. Raman-amplified optical transmission system (1), comprising:
- at least one transmission fiber (4) for Raman amplification of an optical signal (S),
- at least one corresponding pump (5, 5.1, 5.2, 5.3) for pumping the transmission fiber (4) at a plurality of pumping wavelengths (λP1, λP2, λP3),
- at least one lumped Raman amplifier LRA (9, 10, 11) for imparting an additional gain on the optical signal (S), and
- at least one corresponding LRA pump (10, 10.1) for pumping the lumped Raman amplifier LRA (9),
**characterised in that** the LRA pump (10, 10.1) is adapted to operate at a single LRA pumping wavelength (λP3) which is essentially equal to one of the pumping wavelengths (λP3) of the pump (5, 5.3) for pumping the transmission fiber (4).

2. Optical transmission system according to claim 1, **characterised in that** the lumped Raman amplifier LRA (9, 10, 11) consists of a dispersion compensation module DCM comprising a dispersion compensation fiber DCF (9) which forms the gain medium for imparting an additional gain on the optical signal (S).

3. Optical transmission system according to claim 1, **characterised in that** the LRA pump (10) comprises a single laser pump diode (10.1).

4. Optical transmission system according to claim 1, **characterised in that** the LRA pumping wavelength (λP3) is essentially equal to the longest wavelength (λP3) used for pumping the transmission fiber (4).

5. Optical transmission system according to claim 1, further **characterised by** adjusting means (14) for adjusting a plurality of pumping powers each corresponding to one of the pumping wavelengths (λP1, λP2, λP3) used for pumping the transmission fiber (4), such as to produce a substantially flat gain profile (G) of the overall optical transmission system (1).

6. Optical transmission system according to claim 1, further **characterised by** at least one erbium doped fiber amplifier (15) arranged behind the lumped Raman amplifier LRA (9).

7. Optical transmission system according to claim 1, further **characterised by** control means (14) for controlling the pump (5, 5.1, 5.2, 5.3) for pumping the transmission fiber (4) independently from the LRA pump (10, 10.1).

8. Method for amplifying an optical signal (S) in an optical transmission system (1), comprising the steps of:
- Raman amplifying the optical signal (S) in at least one transmission fiber (4) by pumping the transmission fiber (4) at a plurality of pumping wavelengths (λP1, λP2, λP3), and
- imparting an additional gain on the amplified optical signal (S) in at least one lumped Raman amplifier LRA (9, 10, 11),
**characterised by** pumping the lumped Raman amplifier LRA (9, 10, 11) at a single LRA pumping wavelength (λP3) which essentially equals one of the pumping wavelengths (λP3) used for pumping the transmission fiber (4).

9. Method according to claim 8, **characterised in that** the additional gain is imparted on the optical signal (S) in a dispersion compensation fiber DCF (9) of a dispersion compensation module DCM being used as a lumped Raman amplifier LRA (9, 10, 11).

10. Method according to claim 8, **characterised in that** the LRA pumping wavelength (λP3) essentially equals the longest wavelength (λP3) used for pumping the transmission fiber (4).

11. Method according to claim 8, **characterised by** a further step of adjusting a plurality of pumping powers each corresponding to one of the pumping wavelengths (λP1, λP2, λP3) used for pumping the transmission fiber (4) such as to produce a substantially flat gain profile (G) of the overall optical transmission system (1).

12. Method according to claim 8, **characterised in that** pumping of the transmission fiber (4) and pumping of the lumped Raman amplifier LRA (9, 10, 11) are controlled independently.

## Amended claims

### Amended claims in accordance with Rule 86(2) EPC.

**1.** Raman-amplified optical transmission system (1), comprising:
- at least one transmission fiber (4) for Raman amplification of an optical signal (S),
- at least one corresponding pump (5, 5.1, 5.2, 5.3) for pumping the transmission fiber (4) at a plurality of pumping wavelengths (└P1, └P2, └P3),
- at least one lumped Raman amplifier LRA (9, 10, 11) for imparting an additional gain on the optical signal (S), and
- at least one corresponding LRA pump (10, 10.1) for pumping the lumped Raman amplifier LRA (9), the LRA pump (10, 10.1) being adapted to operate at a single LRA pumping wavelength (└P3) which is equal to one of the pumping wavelengths (└P3) of the pump (5, 5.3) for pumping the transmission fiber (4),
**characterised in that** the LRA pumping wavelength (└P3) is equal to the longest wavelength (└P3) used for pumping the transmission fiber (4).

**2.** Optical transmission system according to claim 1, **characterised in that** the lumped Raman amplifier LRA (9, 10, 11) consists of a dispersion compensation module DCM comprising a dispersion compensation fiber DCF (9) which forms the gain medium for imparting an additional gain on the optical signal (S).

**3.** Optical transmission system according to claim 1, **characterised in that** the LRA pump (10) comprises a single laser pump diode (10.1).

**4.** Optical transmission system according to claim 1, further **characterised by** adjusting means (14) for adjusting a plurality of pumping powers each corresponding to one of the pumping wavelengths (└P1, └P2, └P3) used for pumping the transmission fiber (4), such as to produce a substantially flat gain profile (G) of the overall optical transmission system (1).

**5.** Optical transmission system according to claim 1, further **characterised by** at least one erbium doped fiber amplifier (15) arranged behind the lumped Raman amplifier LRA (9).

**6.** Optical transmission system according to claim 1, further **characterised by** control means (14) for controlling the pump (5, 5.1, 5.2, 5.3) for pumping the transmission fiber (4) independently from the LRA pump (10, 10.1).

**7.** Method for amplifying an optical signal (S) in an optical transmission system (1), comprising the steps of:
- Raman amplifying the optical signal (S) in at least one transmission fiber (4) by pumping the transmission fiber (4) at a plurality of pumping wavelengths (└P1, └P2, └P3),
- imparting an additional gain on the amplified optical signal (S) in at least one lumped Raman amplifier LRA (9, 10, 11), and
- pumping the lumped Raman amplifier LRA (9, 10, 11) at a single LRA pumping wavelength (└P3) which equals one of the pumping wavelengths (└P3) used for pumping the transmission fiber (4),
**characterised in that** the LRA pumping wavelength (└P3) equals the longest wavelength (└P3) used for pumping the transmission fiber (4).

**8.** Method according to claim 7, **characterised in that** the additional gain is imparted on the optical signal (S) in a dispersion compensation fiber DCF (9) of a dispersion compensation module DCM being used as a lumped Raman amplifier LRA (9, 10, 11).

**9.** Method according to claim 7, **characterised by** a further step of adjusting a plurality of pumping powers each corresponding to one of the pumping wavelengths (└P1, └P2, └P3) used for pumping the transmission fiber (4) such as to produce a substantially flat gain profile (G) of the overall optical transmission system (1).

**10.** Method according to claim 7, **characterised in that** pumping of the transmission fiber (4) and pumping of the lumped Raman amplifier LRA (9, 10, 11) are controlled independently.
